# EUROPEAN PATENT APPLICATION

(11) **EP 4 570 954 A1**
(43) Date of publication of application: **18.06.2025**
(21) Application number: 23307181.0
(22) Date of filing: 12.12.2023
(51) Int. Cl.: C25B 1/04, C25B 9/19, C25B 11/052, C25B 11/089, C25B 13/02, C25B 13/07, C25B 13/08

(54) **COATED DIAPHRAGM FOR USE IN A ZERO-GAP ELECTROLYSIS CELL DESIGNED FOR GREEN HYDROGEN PRODUCTION**

(71) Applicant: Institut Photovoltaïque d'Ile de France - IPVF, 91120 Palaiseau (FR); Electricité de France, 75008 Paris (FR); TotalEnergies OneTech, 92400 Courbevoie (FR); Centre National de la Recherche Scientifique, 75016 Paris (FR)
(72) Inventor: MENDEZ MEDRANO, Maria Guadalupe, 91120 PALAISEAU (FR); LOONES, Nicolas, 91120 PALAISEAU (FR); NAGHAVI, Negar, 75016 PARIS (FR)
(74) Representative: Lavoix

(57) **Abstract**

The invention relates to a coated diaphragm (16) of an electrochemical device (8) for alkaline electrolysis. The diaphragm (16) comprises an alkaline membrane (18) coated on at least one side with a catalyst layer (20). The catalyst layer (20) is obtained by deposition of at least one metallic catalyst on the membrane (18) by physical vapor deposition, the metallic catalyst being chosen between Ti, V, Cr, Mn, Fe, Co, Ni, Cu, Zr, Nb, Mo, Hf, Ta, W and any combination thereof.

## Description

### Field of the invention

The present invention relates to the field of hydrogen production, more specifically green hydrogen production. The present invention more particularly relates to electrochemical devices and more precisely to a membrane-electrode assembly for the production of hydrogen. The invention describes a zero-gap membrane-electrode assembly comprising a coated diaphragm for use in an electrochemical device.

### Background of the invention

Several different methods exist for industrial hydrogen production. For example, the most common method used for hydrogen production in the world today is to extract hydrogen from natural gas using methane reforming. This method leads to the production of "grey" hydrogen. Another known method currently widely used is to extract hydrogen from coal using gasification. This hydrogen is referred to as "brown" or "black" hydrogen. New methods to produce hydrogen in a more environmentally friendly way have been developed and are more and more used in the industry, for example the production of "blue" hydrogen which is produced from fossil fuels but the carbon dioxide emitted during the process is captured and stored or repurposed, in order to limit the environmental impact of the process.

Water electrolysis only represents about 4% of the global production of hydrogen. When the water electrolysis process is powered by a renewable energy, such as solar or wind energy, the hydrogen produced is called "green" hydrogen. This method of production results in a zero-carbon emission hydrogen production, which makes it very interesting for sustainable development. However, this method of producing green hydrogen still implies technical challenges and very high costs and is therefore not widely used.

Traditional electrolysers are made of at least one electrochemical cell with two compartments, each compartment comprising an electrode. The electrodes are separated by an electrolyte solution and a membrane. In these traditional electrolysers, the electrodes are separated from the membrane by spacers and the spaces between the membrane and the electrodes contain the electrolyte solution. There exists therefore a gap between the two electrodes that the ions must cross in order to make the electrolysis chemical reaction possible. This gap leads to ohmic losses, that is to say to a voltage drop and a lower efficiency of the electrochemical device.

The reduction of ohmic losses in electrochemical reactors and fuel cells is an important problem to solve. One way to limit the losses is to reduce the distance between the two electrode plates. This configuration is called "zero-gap" membrane-electrode assembly (MEA). The first concept of zero gap configuration in alkaline water electrolysis was disclosed in 1967 by Costa and Grimmes, using mesh electrodes on each side for a microporous gas separator (R. Costa and P. Grimes, Chem. Eng. Prog., 1967, 63, 56-58). In these zero-gap MEAs, the membrane is coated with a layer of catalysts on each of its sides. On each side of the catalysts-coated membrane is a thin, porous gas/liquid diffusion layer that separates the membrane from the electrode plates. This design allows for a greatly reduced distance between the two electrodes, which minimizes the voltage drop between them and increases the current densities and the efficiency of the electrolyser.

Two distinct methods currently exist for coating membranes with catalysts in zero-gap membrane-electrode-assembly: catalysts-coated membranes (CCMs) and catalysts-coated substrates (CCSs). Studies have indicated that CCMs fabrication methods have better performance than CCSs fabrication methods. CCMs are mainly used for fuel cells and proton-exchange membrane (PEM) technologies. For example, WO2004091024A1 discloses ionomer membranes coated with catalysts on both side of the membrane. The catalysts coated on the cathode side was Pt/Vulcan XC72 and on the anode side PtRu(1 :1)/Vulcan XC72.

Methods used to coat the catalyst directly on the surface of the membrane are traditionally spray techniques such as direct wet spray, decal transfer, painting, screen and inkjet printing, doctor blade coating, and layer-by-layer (LbL) techniques. All these methods use catalysts inks. Catalyst inks are preparations that usually comprise an ionomer solution, carbon powder with a platinum catalyst, and a solvent such as alcohol or water. For example, US6299744 discloses the preparation and the use of catalyst inks containing platinum or palladium to coat a solid electrolyte membrane in an electrolysis system for hydrogen generation. Mention may also be made of the Journal of Power Sources 539 (2022) 231476 that discloses the use of catalysts inks containing NiCo2O4 and NiFe2O4 on a PSEBS-CM polymer membrane.

Other methods of fabrication for CCMs exist, such as coating the membrane with nano-sized catalytic metal and carbon particles by simultaneously sputtering a catalytic metal source and a carbon source to form a nanophase catalyst layer. Sputtering is a physical vapor deposition technique in which an ionized gas molecule is used to displace atoms from a target material onto a substrate material. Sputtering is a thin film deposition technique that can create a very thin and uniform film onto a substrate.

There exist several types of sputtering processes such as ion beam, diode, and magnetron sputtering. For example, US6171721 B1 discloses a method for preparing an acidic membrane for use in a fuel cell membrane-electrode-assembly by sputter depositing at least one catalyst onto said membrane. The deposition is made onto a Nation^{®} based membrane. Nation^{®} membranes are mainly made of polytetrafluoroethylene chains with side chains containing ether groups and an end sulfonic acid group. However, the catalysts layers comprise metals that are not earth abundant and are rare and expensive, such as platinum or rhodium.

Further, experiments carried out by the inventors have shown that the deposition of earth abundant metal catalyst compositions such as nickel-molybdenum-iron composition on a membrane made of Nation^{®} or other sulfonic acid polymers leads to the immediate dissolution of the catalyst composition layer on the electrolyte membrane. Therefore, the use of the sputtering method to deposit earth abundant metal catalyst composition on an acidic membrane such as Nation^{®}, leads to the destruction of the catalytic layer. The coated membrane is therefore unusable for electrolysis.

It is also known that traditional alkaline electrolysers can suffer from an accumulation and growth of bubbles on the surface of the catalyst material. The bubbles reduce the accessible site for the electrolysis reaction and therefore negatively impact the efficiency of the electrolyser. The fluctuation of renewable energy amplifies the electrode degradation For this reason, these traditional electrolysers do not perform well with intermittent power supplies. The catalysts layers are not stable enough for the electrochemical devices to be powered with a current that is not homogenous over time.

All of these reasons make traditional alkaline electrolysers unsuitable to be used with most renewable power sources, such as solar or wind powered installations, and therefore unsuitable for the production of green hydrogen. These renewable power sources will be more and more exploited in the coming years and there is therefore a need for an electrolysis system that is stable enough to work with these sources.

Based on the current state of the art, there is clearly a need for an innovative method of coating membranes that use non-noble, inexpensive metal catalysts, and that creates a catalysts layer that is stable in the long term and can be used with intermittent power supplies such are renewable energy supplies to produce green hydrogen.

### Summary of the invention

The present invention aims to overcome to above-mentioned drawbacks and to provide a membrane-electrode assembly, which comprises a catalyst layer that is based on inexpensive, earth abundant metals, and is stable enough to be used with intermittent power sources.

To this end, an object of the invention is a coated diaphragm of an electrochemical device for alkaline electrolysis, the diaphragm comprising an alkaline membrane coated on at least one side with a catalyst layer, wherein the catalyst layer is obtained by deposition of at least one metallic catalyst on the membrane by physical vapor deposition, the metallic catalyst being chosen between Ti, V, Cr, Mn, Fe, Co, Ni, Cu, Zr, Nb, Mo, Hf, Ta, W and any combination thereof.

The inventors have found that the catalyst layer according to the invention allows for increase current density due to reduced ohmic losses, thus providing a coated diaphragm showing good performances at lower cost and with good stability.

The coated diaphragm according to the invention may comprise one or more of the following features considered alone or in any combination that is technically possible:
- the alkaline membrane is made of a porous composite material, preferably made of a polysulfone network and ZrO₂ as metallic oxide filler or made of an imidazolium-functionalized polymer;
- the at least one metallic catalyst is chosen among nickel, molybdenum, iron, and any combinations thereof;
- the alkaline membrane is coated on both sides;
- the metallic catalysts deposited on each side of the membrane are different;
- the metallic catalyst deposited on a first side of the membrane is a combination of Ni and Mo or of Ni, Mo and Fe, and the metallic catalyst deposited on a second side of the membrane is a combination of Ni and Fe or of Ni, Mo and Fe;
- the catalyst layer is obtained by deposition of the at least one metallic catalyst on the membrane by sputtering or by thermal evaporation.

The invention also relates to a method of manufacturing a coated diaphragm as defined above, comprising the following steps:
- providing an alkaline membrane;
- coating at least one side of said membrane by depositing a layer of catalysts directly onto the surface of the membrane by a physical vapor deposition technique.

According to a favorite embodiment, the physical vapor deposition technique is chosen between sputtering and thermal evaporation.

The invention also relates to a membrane-electrode-assembly for use in an electrochemical device, the assembly comprising a coated diaphragm as defined above.

The membrane-electrode-assembly according to the invention may comprise one or more of the following features considered alone or in any combination that is technically possible:
- the coated diaphragm is assembled into a zero-gap configuration;
- the membrane-electrode assembly further comprises at least one current collector, said current collector being in a metallic material chosen between nickel, stainless steel and titanium;
- the membrane-electrode assembly further comprises an electrolyte, said electrolyte being chosen between water, KOH, KCI, Na₂SO₄ and NaOH.

Another object of the invention is an electrochemical device comprising a membrane-electrode assembly as defined above, wherein the device is an electrolytic cell for alkaline water electrolysis.

The invention also relates to the use of the electrochemical device as defined above for producing green hydrogen.

### Brief description of the drawings

The invention will be easier to understand in view of the following description, provided solely as an example and with reference to the appended drawings:
- Figure 1 is a schematic view of a membrane-electrode assembly (MEA) according to the invention;
- Figure 2 is a graph showing the current-voltage (I-V) curve of zero-gap membrane-electrode assemblies according to the invention, with different compositions of catalysts layers;
- Figure 3 is a graph of the current density over time of the assemblies of Figure 2, measured by chronoamperometry;
- Figure 4 represents the production over time of H₂ by a MEA according to the invention;
- Figure 5 is a graph representing the current-voltage (I-V) curve of a Zirfon^{®} diaphragm that was coated by sputtering with a catalyst layer made of nickel and molybdenum on the cathode side and of nickel and iron on the anode side, the dashed line representing the performances of the MEA in water conditions and the continuous line representing the performances of the MEA in 1M KOH conditions;
- Figure 6 is a graph of the cell voltage over time of the assembly of Figure 5 at 10 mA/cm²;
- Figure 7 is a graph showing H₂ and O₂ production during the stability duration of Figure 6;
- Figure 8 is a graph of the cell voltage over time of a MEA according to the invention powered by a solar module.

### Detailed description

The invention will now be described with preferred embodiments. These embodiments are presented to help with the understanding of the present invention and are not intended to limit the invention. Other characteristics, variants and advantages of a coated diaphragm according to the invention and its use will become more clearly apparent on reading the description and examples which follow and are given by way of illustration and do not limit the invention

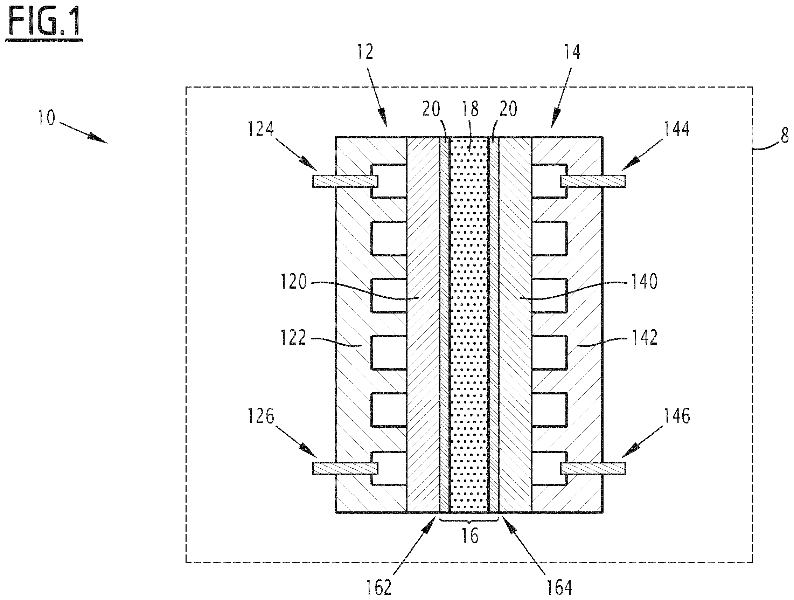

Figure 1 shows a membrane-electrode assembly 10 according to the invention. Said assembly 10 is configured to be assembled in an electrochemical device 8, schematically represented by a dashed box.

Said electrochemical device 8 is typically an alkaline electrolyser, for example an alkaline water electrolyser. The electrolyser may be a single cell or a stack of a plurality of cells.

In a preferred embodiment shown on Figure 1, the membrane-electrode assembly 10 has a zero-gap structure.

In the example shown in FIG. 1, the assembly 10 comprises an anodic compartment 12, a cathodic compartment 14 and a coated diaphragm 16 interposed between the anodic and cathodic compartments 12, 14.

The anodic compartment 12 acts as an oxygen evolution unit and the cathodic compartment 14 acts as a hydrogen evolution unit.

Each compartment 12, 14 comprises an electrode 120, 140, respectively an anode 120 and a cathode 140, each comprising a respective current collector 122, 142.

Each current collector 122, 142 is preferably made in a metallic material chosen between nickel, stainless steel and titanium. Preferably, each current collector 122, 142 is made of nickel.

Each compartment 12, 14 comprises an electrolyte inlet 124, 144 for introducing an electrolyte solution into the electrode compartment 12, 14 and an electrolyte outlet 126, 146 for extracting the electrolyte solution from the electrode compartment 12, 14.

Preferably, the electrolyte solution is chosen between water, KOH, KCI, Na₂SO₄, and NaOH. For example, the electrolyte solution is a 1M KOH solution.

In one particular example of embodiment, the membrane-electrode-assembly 10 according to the invention is used in water conditions.

As specified above, the invention uses a coated diaphragm 16, wherein at least one side of the diaphragm is coated with a catalyst layer.

The coated diaphragm 16 is in contact with the electrodes 120, 140 and is sandwiched between them to form the zero gap structure.

A first side 162 of the diaphragm 16, called the anode side, is in contact with the anode 120 and a second side 164 of the diaphragm 16, called the cathode side, is in contact with the cathode 140.

In the context of the invention, the term "diaphragm" refers to a separator, which is a porous polymer barrier. In the context of the invention, the diaphragm is not an ion-selective membrane.

The diaphragm 16 comprises an alkaline membrane 18 coated on at least one side with a catalyst layer 20.

Said membrane 18 is preferably made of a porous composite material.

Typically, the porosity of the membrane 18 is of 55% ± 10 %. The membrane porosity may be measured for example by mercury porosimetry.

For example, the membrane 18 comprises a porous substrate made of a polysulfone network and ZrO₂ as metallic oxide filler. Such membranes are for example commercialized under the trademark Zirfon^{®}.

The use of a porous substrate such as Zirfon^{®} increases the surface area on which the catalyst layer can be deposited and therefore increases the number of active sites, leading to an overall better efficiency of the electrolysis reaction.

Alternatively, the membrane 18 is made of an imidazolium-functionalized polymer. Such diaphragm is for example commercialized under the trademark Sustainion^{®}.

The membrane 18 has typically a thickness comprised between 100 µm and 550 µm, notably comprised between 150 µm and 500 µm.

The or each catalyst layer 20 is obtained by deposition of at least one metallic catalyst on the membrane 18 by physical vapor deposition.

The metallic catalyst is chosen between earth abundant metals and their combination.

In the context of the invention, the term "earth abundant metal" refers to a metal that is abundant on earth and more specifically to one of the following elements: titanium, vanadium, chromium, manganese, iron, cobalt, nickel, copper, zirconium, niobium, molybdenum, hafnium, tantalum, and tungsten.

Using earth abundant catalysts allows manufacturing diaphragm at lower costs.

The or each catalyst layer 20 is formed of one or more earth abundant metal(s) as specified above, preferably is formed of a mixture of at least two different earth abundant metals.

According to a preferred embodiment, the catalyst layer 20 comprises, or advantageously consists of one or more earth abundant metal(s) chosen between nickel, molybdenum, iron, and mixtures thereof.

Preferably, the catalyst layer 20 consists of nickel, nickel-molybdenum, nickel-iron, or nickel-molybdenum-iron.

According to a preferred embodiment, the polymer diaphragm 16 is coated on both sides 162, 164 by a catalyst layer 20.

In this embodiment, the catalyst layers 20 deposited on both sides of the membrane may be different from each other or identical. The catalyst layers 20 may comprise different earth abundant metals and/or different proportions of catalyst metals. Their thickness, texture, and color may be different. The catalyst layers on each side of the diaphragm 16 may also be identical.

For example, the metallic catalyst deposited on the cathode side 164 is a combination of Ni and Mo forming a Ni-Mo catalyst layer, and the metallic catalyst deposited on the anode side 162 is a combination of Ni and Fe, forming a Ni-Fe catalyst layer.

Possible compositions are for example:
- Ni₁₋ₓMoₓ, x being comprised between 0 and 1 (excluded), preferably between 0.10 and 0.25, more preferably around 0.20;
- Ni_{1-y}Fe_{y}, y being comprised between 0 and 1 (excluded), preferably between 0.20 and 0.30, more preferably around 0.25; or
- Ni_{1-x'-y'}Fe_{x'}-Mo_{y',} with x'+ y' being comprised between 0 and 1 (excluded), x' being preferably between 0.10 and 0.20, more preferably around 0.165 and x' being preferably between 0.02 and 0.10, more preferably around 0.04.

For example, possible compositions are Ni_{0.80}Fe_{0.20}, Ni_{0.75}Mo_{0.25} and Ni_{0.79}Fe_{0.17}Mo_{0.04}.

Using Ni-Mo as hydrogen evolution catalyst (HEC) and Ni-Fe as oxygen evolution catalyst (OEC) is particularly advantageous.

It was observed that the deposition of a combination of nickel-molybdenum, nickel-molybdenum-iron, or nickel-iron catalyst layers on an alkaline membrane with a sputtering technique showed an improved wettability of the catalyst layer. An improved wettability of the catalysts layer accelerates bubble separation, and therefore reduces the accumulation and the growth of gas bubbles on the surface the layer. Accumulation and growth of H₂ and O₂ bubbles on the surface of the catalyst layer can block reaction sites and the diffusion of electrolytes, which reduces the efficiency of the electrochemical device. Therefore, a catalyst layer with a better wettability leads to a better production of hydrogen.

According to a preferred embodiment of the invention, the diaphragm 16 is coated with a physical vapor deposition technique chosen between sputtering and thermal evaporation.

Advantageously, the or each catalyst layer 20 is formed by sputtering. Sputtering makes it possible to obtain a very thin and uniform catalyst layer 20.

Advantageously, the catalyst layer 20 extends over the whole surface of the side it is deposited on. In other words, the whole surface of the membrane is coated.

By "whole surface", we mean at least 95% of the surface, advantageously at least 99% of the surface.

Advantageously, the or each catalyst layer 20 has a thickness comprised between 100 nm and 500 nm. The thickness of a catalyst layer is advantageously sensibly constant over the surface it is deposited on.

The thickness of the catalyst layer may be measured by profilometer and by cross-sectional analysis using scanning electron microscopy.

A method for manufacturing a coated diaphragm 16 according to the invention will now be described.

First, an uncoated membrane as described above is provided. For example, a membrane made of a porous substrate made of a polysulfone network and ZrO₂ as metallic oxide filler, such as a Zirfon^{®} membrane, is provided.

At least one side of said membrane 18 is then coated by depositing a layer of metallic catalysts directly onto the surface of the membrane. Preferably, both sides of the membrane 18 are coated.

The or each catalyst layer 20 is formed by using a physical vapor deposition technique.

Advantageously, the membrane 18 is coated by sputtering. In other words, the metallic catalysts are sputter-deposited as layer on the anode side 162, on the cathode side 164 or both the anode and cathode sides.

Typically, the membrane 18 is introduced into a film formation chamber of a sputtering apparatus (not shown). The sputtering apparatus is for example a magnetron sputtering apparatus of a multi-target type.

Next, the catalyst layer 20 is formed by sputtering. Sputtering is preferably performed at room temperature, typically at 20°C.

For the sputtering, a multi-component alloy target may be used, or simultaneous sputtering using different metal target may be used.

For example, the target is chosen between Ni₁₋ₓMoₓ (0<x<1) or Ni_{1-y}Fe_{y} (0<y<1) and Ni_{1-x-y}MoₓFe_{y} (0<x+y<1).

The inventors have found that sputtering used as a deposition method to deposit catalyst directly onto the membrane has advantages compared to ink techniques for membrane coating. It allows for a better control of the composition of the catalyst layer and a better control of the deposition, which leads to a more uniform thickness of the layer. With sputtering, it is possible to obtain a very thin and uniform layer. This improved control and uniformity is a factor for better reproducibility of the method, which is an advantage to use the invention in both experimental and industrial settings.

The bond created with the sputtering method also leads to a better stability of the catalyst layer on the membrane. The deposition by sputtering also allows for a high surface coating of catalysts on both side of the membrane, with different texture and colors on the anode side and on the cathode side of the membrane.

Furthermore, the sputtering technique is more environmentally friendly as it is nontoxic and does not lead to harmful by-products.

In a particular embodiment of the invention, the diaphragm 16 may be coated with a catalyst layer 20 with a sputtering technique on only one side. The other side may not be coated or may be coated with a layer of catalysts that is deposited with an ink deposition technique or any deposition technique that is not sputtering.

Then, the catalyst coated diaphragm 16 is installed in a membrane-electrode-assembly 10 in a zero-gap configuration design.

The invention will be more easily understood through the following examples, which are provided as illustrations and are not intended to limit the present invention.

### Examples

### Example 1

In a first example of embodiment, a membrane-electrode assembly was manufactured using a Zirfon^{®} membrane on which different catalyst compositions were deposited on each side using a sputtering technique.

From NiMo, NiFe and NiMoFe targets, the samples were deposited onto both sides of the membrane either by a radio frequency (RF) magnetron plasma sputtering machine at room temperature, at 100 W of power, with an argon flow of 28 sccm - standard cubic centimeter per minute - and a pressure to 0.8 mbar, or by direct current (DC) at room temperature, at a working pressure of 2 Pa, with a plasma current of 6 A and an argon flow of 50 sccm both of them under a rotation speed of 25 RPM.

The composition of the Zirfon^{®} membrane used in this example was: polysulfone/ZrO2 (ratio), and the thickness of the diaphragm was 500 µm and porosity 55%+/- 10%.

The following catalyst combinations were applied on each side of the Zirfon^{®} diaphragms:

| HER side (cathode side) | OER side (anode side) |
|---|---|
| NiMo | NiMo |
| NiFe | NiFe |
| NiMo | NiFe |
| NiMoFe | NiMoFe |
| Ni | Ni |

The deposition of catalyst was made by sputtering and the layers obtained had the following thickness:

| Catalyst layer composition | Substrate | Thickness (nm) |
|---|---|---|
| Ni_{0.75}Mo_{0.25} | Zirfon^{®} | 286 |
| Ni_{0.80}Fe_{0.20} | | 308 |
| Ni_{0.79}Mo_{0.04}Fe_{0.17} | | 301 |

The coated diaphragm was installed in a membrane-electrode assembly electrolyser using a zero-gap configuration.

Nickel was used as a current collector and the electrolyte solution was 1M KOH.

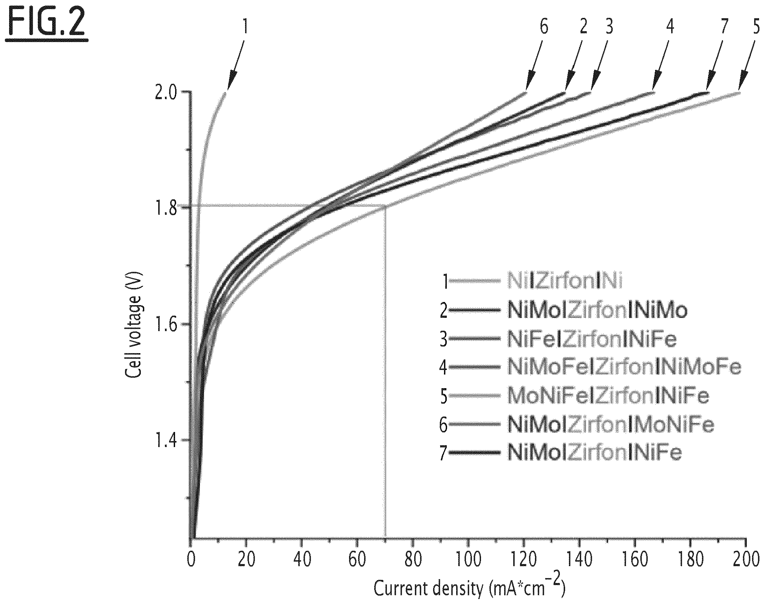

The performances of each of these catalyst combinations were tested. The results are illustrated on the graph of **Figure 2****.** The I-V curves show that the best results were obtained with NiMoFe on the cathode side and NiFe on the anode side of the Zirfon^{®} diaphragm, with 70mA/cm² for an operational voltage of 1.8 V. This corresponds to an efficiency of the electrolyser of 68% at 70 mA/cm². The efficiency is obtained by dividing the thermal neutral voltage (1.48 V) by the operational voltage.

Very good results were also obtained with NiMo on the cathode side and NiFe on the anode side of the Zirfon^{®} diaphragm, with 200 mA/cm² for an operational voltage of 2 V, and 10 mA/cm² for an operational voltage of 1.59 V. This corresponds to an efficiency of the electrolyser of 93% at 10 mA/cm² and 74% at 200 mA/cm².

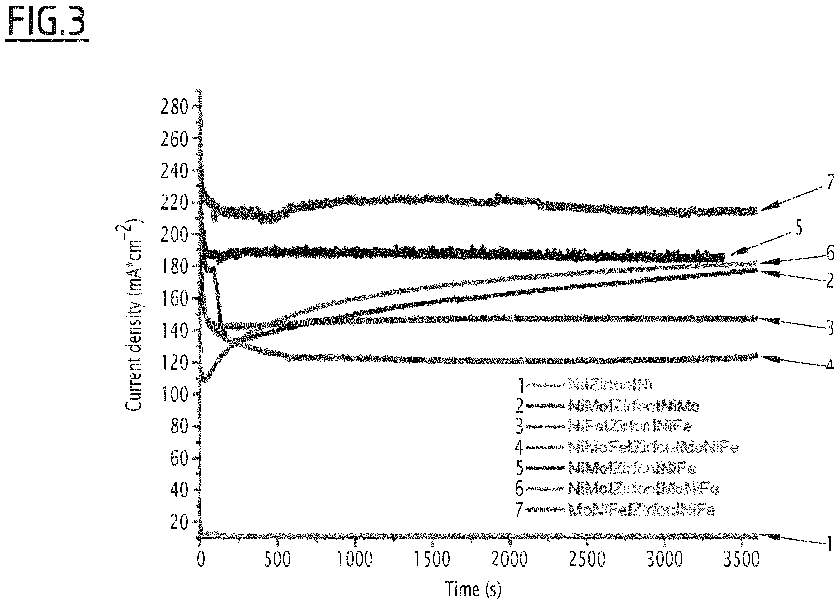

The stability of these different coated membranes was also monitored with the chronoamperometry technique. **Figure 3** shows the current densities of each of the catalyst layers tested for an applied potential of 2V in 1M KOH and pH=13 conditions. The best stability results were obtained with NiMoFe on the cathode side and NiFe on the anode side of the Zirfon^{®} diaphragm.

Visual comparisons of the catalysts layers were done before and after the stability study. It was observed that after reaction at higher current densities, the catalysts do not suffer much damage after one hour of reaction, which shows their stability.

### Example 2

A MEA was produced according to the invention. A Zirfon^{®} diaphragm was used. NiMoFe was deposited on the HER side of the membrane and NiFe was deposited on the OER side of the membrane. Both catalysts were deposited by sputtering.

The MEA was tested in alkaline conditions in 1M KOH. The production of H₂ was monitored for the duration of the chronopotentiometry at 10 mA/cm², by using a potentiostat

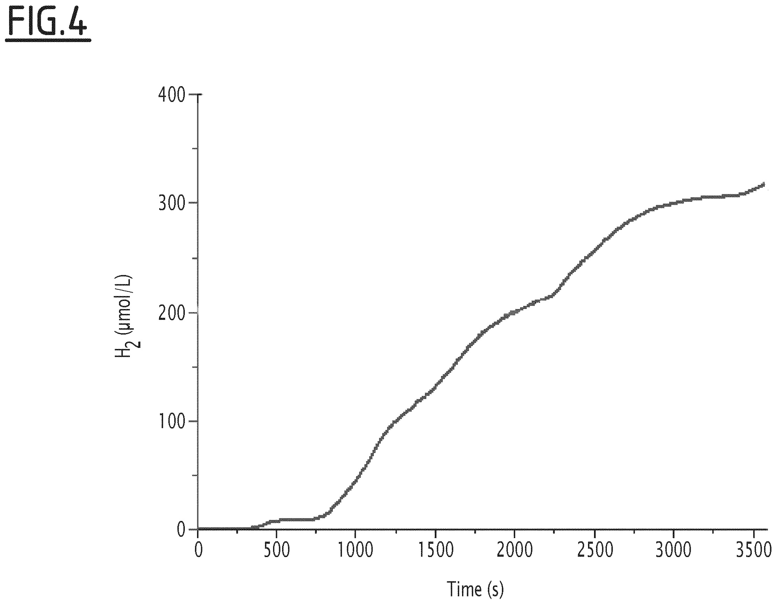

The results are shown on **Figure 4****.** With the MEA according to the invention, only a low cell voltage of 1.6 V was required to reach 10 mA/cm² and produce H₂.

### Example 3

A MEA was produced according to the invention with a Zirfon^{®} diaphragm. NiMo was deposited on the HER side of the membrane and NiFe was deposited on the OER side of the membrane. Both catalysts were deposited by sputtering.

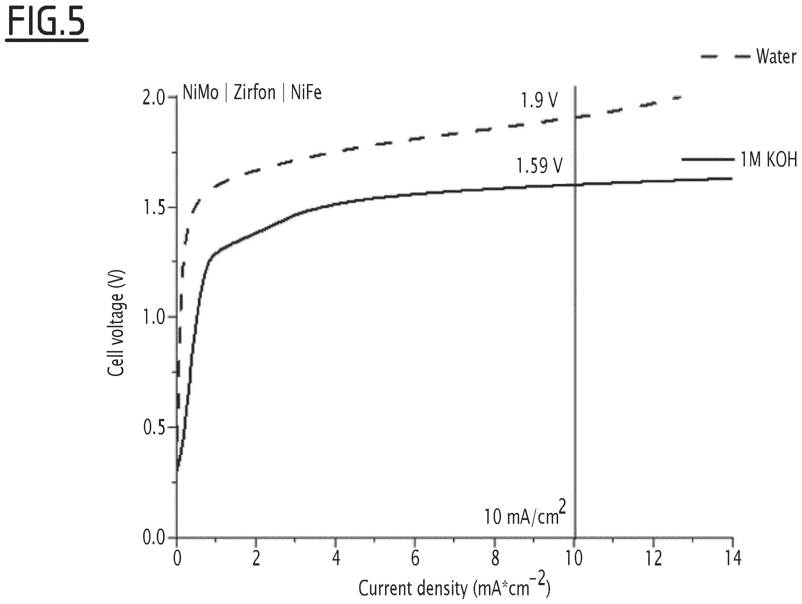

The MEA was tested in water and alkaline conditions and the results show that 10 mA/cm² can be reached when a voltage of respectively 1.9 V and 1.59 V is applied, referring to **Figure 5****.**

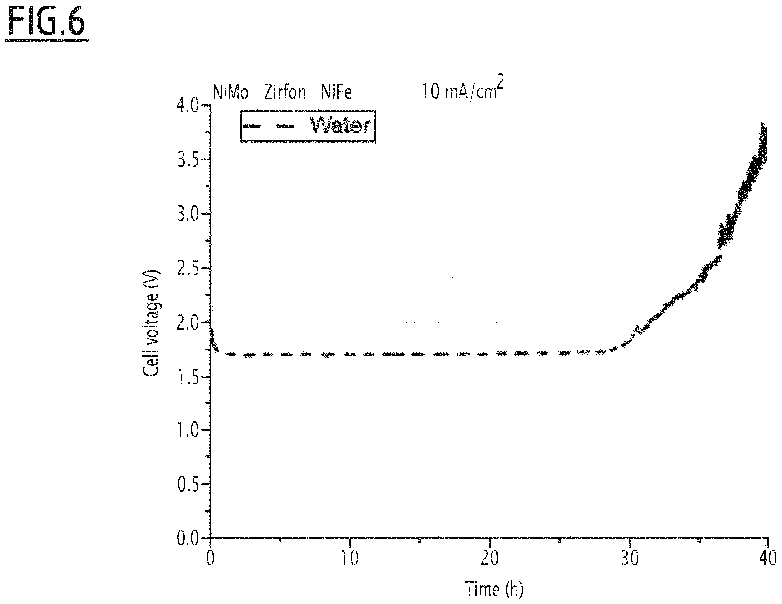

The stability of the catalysts-coated membrane according to the invention was tested in water and the results show that the performance remained stable for 30h, as shown on **Figure 6****.**

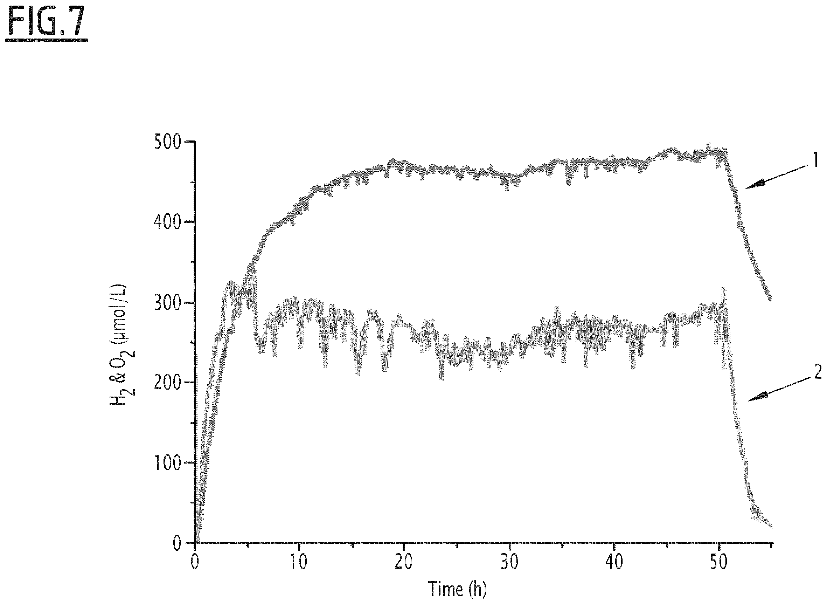

The gas production at 10 mA/cm² was also tested and the production of O₂ (curve 1) and H₂ (curve 2) remained stable at about 250 µmol/L during at least 30h as seen on **Figure 7****.**

This example shows that the membrane-electrode-assembly used in water conditions delivers satisfactory performances. Water conditions are more environmentally friendly and cost effective and it is therefore an advantage to have an electrochemical device that works in water conditions.

### Example 4

A MEA was manufactured according to the invention. NiMo was deposited on the HER side of a Zirfon^{®} membrane and NiFe was deposited on the OER side. Both catalysts were deposited by sputtering.

A solar crystalline Silicone (c-Si) module was coupled with the electrolyser and connected to the potentiostat. The module was illuminated by a solar simulator Oriel LCS-100, Class AAA and standard AM1.5G operation at 1.0 Sun output.

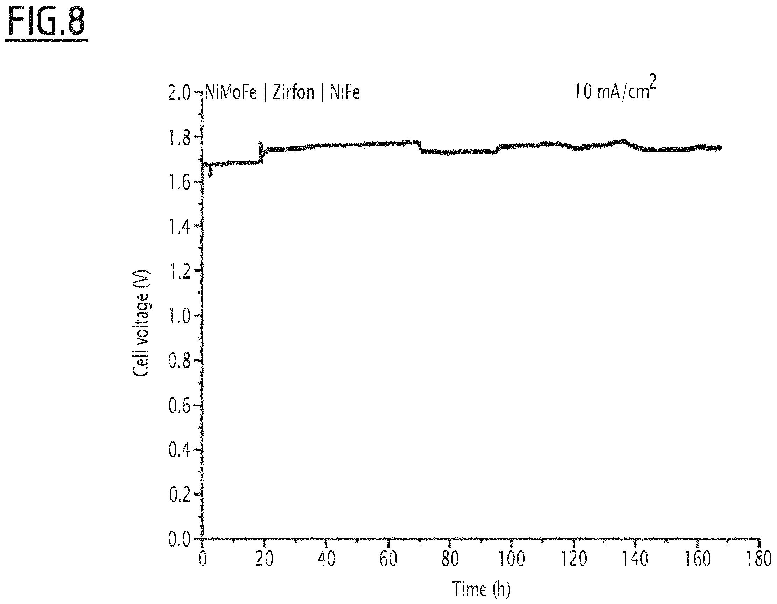

**Figure 8** shows that the electrolyser performance remained stable for more than 8 days while being powered by the solar module.

It is known that alkaline electrolysers from prior art are not stable when submitted to an intermittent source of power such as photovoltaic solar power which varies depending on the weather and day and night cycle.

The sputtering deposition technique creates a strong bond between the membrane and the catalyst layer. The catalysts layer deposited on the membrane therefore remains stable, which makes it suitable to be used with renewable power supplies such as photovoltaic solar power.

The invention therefore allows for the production of green hydrogen from renewable power sources.

## Claims

1. A coated diaphragm (16) of an electrochemical device (8) for alkaline electrolysis, the diaphragm (16) comprising an alkaline membrane (18) coated on at least one side with a catalyst layer (20), wherein the catalyst layer (20) is obtained by deposition of at least one metallic catalyst on the membrane (18) by physical vapor deposition, the metallic catalyst being chosen between Ti, V, Cr, Mn, Fe, Co, Ni, Cu, Zr, Nb, Mo, Hf, Ta, W and any combination thereof.

2. The coated diaphragm (16) according to claim 1, wherein the alkaline membrane (18) is made of a porous composite material, preferably made of a polysulfone network and ZrO₂ as metallic oxide filler or made of an imidazolium-functionalized polymer.

3. The coated diaphragm (16) according to any of the preceding claims, wherein the at least one metallic catalyst is chosen among nickel, molybdenum, iron, and any combinations thereof.

4. The coated diaphragm (16) according to any of the preceding claims, wherein the alkaline membrane (18) is coated on both sides.

5. The coated diaphragm (16) according to claim 4, wherein the metallic catalysts deposited on each side of the membrane (18) are different.

6. The coated diaphragm (16) according to claim 4 or 5, wherein the metallic catalyst deposited on a first side of the membrane (18) is a combination of Ni and Mo or of Ni, Mo and Fe, and the metallic catalyst deposited on a second side of the membrane (18) is a combination of Ni and Fe or of Ni, Mo and Fe.

7. The coated diaphragm (16) according to any of the preceding claims, wherein the catalyst layer (20) is obtained by deposition of the at least one metallic catalyst on the membrane (18) by sputtering or by thermal evaporation.

8. A method of manufacturing a coated diaphragm (16) according to any of the preceding claims, comprising the following steps:
- providing an alkaline membrane (18);
- coating at least one side of said membrane (18) by depositing a layer of catalysts directly onto the surface of the membrane (18) by a physical vapor deposition technique.

9. The method according to claim 8, wherein the physical vapor deposition technique is chosen between sputtering and thermal evaporation.

10. A membrane-electrode assembly (10) for use in an electrochemical device (8), the assembly (10) comprising a coated diaphragm (16) according to any of claims 1 to 7.

11. The membrane-electrode assembly (10) according to claim 10, wherein the coated diaphragm (16) is assembled into a zero-gap configuration.

12. The membrane-electrode assembly (10) according to claim 10 or 11, further comprising at least one current collector (122, 124), said current collector (122, 124) being in a metallic material chosen between nickel, stainless steel and titanium.

13. The membrane-electrode assembly (10) according to any of claims 10 to 12, further comprising an electrolyte, said electrolyte being chosen between water, KOH, KCI, Na₂SO₄ and NaOH.

14. An electrochemical device (8) comprising a membrane-electrode assembly (10) according to any of claims 10 to 13, wherein the device (8) is an electrolytic cell for alkaline water electrolysis.

15. Use of the electrochemical device (8) according to claim 14 for producing green hydrogen.
